# EUROPEAN PATENT APPLICATION

(11) **EP 1 921 419 A1**
(43) Date of publication of application: **14.05.2008**
(21) Application number: 06797217.4
(22) Date of filing: 31.08.2006
(51) Int. Cl.: G01C 21/00, G08G 1/04, G08G 1/09, G09B 29/00, G09B 29/10

(54) **IMAGE DISPLAY DEVICE AND IMAGE GENERATION DEVICE**

(30) Priority: 02.09.2005 JP 2005254787
(71) Applicant: MATSUSHITA ELECTRIC INDUSTRIAL CO., LTD., Kadoma-shi, Osaka 571-0051 (JP)
(72) Inventor: IISAKA, Atsushi Matsushita Elec. Ind. Co., Ltd., Chuo-ku, Osaka-shi, Osaka, 540-6207 (JP); NISHIMURA, Kenji Matsushita Elec. Ind. Co., Ltd., Chuo-ku, Osaka-shi, Osaka, 540-6207 (JP); MORI, Toshiaki Matsushita Elec. Ind. Co., Ltd., Chuo-ku, Osaka-shi, Osaka, 540-6207 (JP); YAMAMOTO, Akihiro Matsushita Elec. Ind. Co., Ltd., Chuo-ku, Osaka-shi, Osaka, 540-6207 (JP)
(74) Representative: Pautex Schneider, Nicole Véronique
(86) International application number: PCT/JP2006/317257
(87) International publication number: WO 2007/026839

(57) **Abstract**

An object of the present invention is to display or generate a map image which is easy for a moving user to intuitively understand. In an image providing system, an image generation apparatus 2 is connected to an image pickup apparatus 1, which is externally provided, so as to communicate with each other, and an image display apparatus 3 is connected to the image generation apparatus 2 so as to communicate with each other. The image display apparatus 3 displays a first map image of a moving object having the image display apparatus itself mounted thereon, and the vicinity of the moving object by using a display section 34. A communication section 35 requests a point-of-view converted image from the image generation apparatus 2 by notifying an point-of-view angle and a line-of-sight direction of the displayed first map image. A central processing section 33 of the image generation apparatus 2 generates the point-of-view converted image by converting a point-of-view angle and a line-of-sight direction of a taken image acquired by the image pickup apparatus 1 so as to match the point-of-view angle and the line-of-sight direction, respectively, of the first map image, in response to a request from the communication section 35. The communication section 35 transmits, to the image display apparatus 3, the point-of-view converted image generated by the central processing section 33. The display section 34 of the image display apparatus 3 displays a second map image in which the point-of-view converted image is superimposed on the first map image.

## Description

### TECHNICAL FIELD

The present invention relates to an image display apparatus and an image generation apparatus for displaying and generating a map image including a taken image taken by an image pickup apparatus.

### BACKGROUND ART

A conventional map display apparatus as described below is known. The conventional map display apparatus is communicably connected through a traffic control network to image pickup apparatuses each provided at a traffic signal. One traffic signal is provided on each corner of an intersection, i.e., the east side of the intersection, the west side thereof, the south side thereof, and the north side thereof. The image pickup apparatus provided at the traffic signal on the east side takes an image of a state of a road running toward the image pickup apparatus itself, that is, a road running from the west into the intersection, and transmits an obtained video to the map display apparatus through the traffic control network. Further, the image pickup apparatuses provided on the west side, the south side, and the north side each transmits, to the map display apparatus through the traffic control network, a video of a state of a road running toward the image pickup apparatus itself , that is, videos of states of roads running from the east, the north, and the south, respectively, into the intersection.

The map display apparatus includes a map information display board on which an intersection is displayed, and four monitors which are assigned with four directions, east, west, south and north, respectively. The monitor for the east is embedded in a portion corresponding to the east side of the intersection displayed on the map information display board. The monitors for the west, the south, and the north are embedded in portions corresponding to the west side of the intersection displayed on the map information display board, the south side thereof, and the north side thereof, respectively.

The map display apparatus acquires, from the image pickup apparatus provided on the west side, a video representing a road running into the intersection from the east, and rotates the acquired video in the left direction (counterclockwise), and then displays, on the monitor for the east, a video obtained by the rotation. Similarly, a video obtained by rotating, in the right direction (clockwise), a video representing a state of a road running into the intersection from the west is displayed on the monitor for the west. Further, a video obtained by vertically inverting (by rotating 180 degrees) a video representing a state of a road running into the intersection from the south is displayed on the monitor for the south. Further, on the monitor for the north, a video representing a state of a road running into the intersection from the north is displayed.

The processes described above allow a video representing the intersection and its vicinity as viewed vertically from overhead to be displayed on the map information display board. Thus, a viewer is allowed to intuitively recognize the state of the intersection.
Patent Document 1: Japanese Laid-Open Patent Publication No. 11-161888

### DISCLOSURE OF THE INVENTION

### PROBLEMS TO BE SOLVED BY THE INVENTION

As the point of view used for the video displayed on the map information display board, the point of view of the image pickup apparatus, that is, the point of view of a camera is used as it is. On the other hand, the point of view used for displaying the intersection, that is, a road map, on the map information display board is a point of view used for displaying the intersection viewed vertically from overhead of the intersection. That is, the point of view is different therebetween. A viewer is allowed to easily understand such a content displayed on the map display board, in a stationary state such as a state in a traffic control center or the like.

However, there is a problem that, since the point of view used for the video is different from the point of view used for the road map in a moving state such as a state in a vehicle, a driver has difficulty in intuitively understanding a content displayed on the map information display board.

Therefore, an object of the present invention is to provide a display apparatus or a generation apparatus for displaying or generating a map image which is easy for a moving user to intuitively understand.

### SOLUTION TO THE PROBLEMS

To achieve the above object, a first aspect of the present invention is directed to an image display apparatus, connected through a communication network to at least one image pickup apparatus and an image generation apparatus each of which is externally provided, capable of displaying at least two types of map images. The image display apparatus includes a first display section for displaying a first map image of a moving object and a vicinity of the moving object, the moving object having the image display apparatus mounted thereon, and a request transmission section for requesting a point-of-view converted image from the image generation apparatus by at least notifying the image generation apparatus of a point-of-view angle and a line-of-sight direction of the first map image displayed by the first display section. Here, the image generation apparatus acquires a taken image from the image pickup apparatus in response to a request from the request transmission section, and thereafter generates the point-of-view converted image by converting a point-of-view angle and a line-of-sight direction of the taken image having been acquired so as to match the point-of-view angle and the line-of-sight direction, respectively, notified by the request transmission section, and provides the image display apparatus with the point-of-view converted image. The image display apparatus further includes a second display section for displaying a second map image in which the point-of-view converted image provided by the image generation apparatus is superimposed on the first map image.

The request transmission section of the image display apparatus further notifies the image generation apparatus of a traveling direction of the moving object. In this case, the image generation apparatus acquires a taken image from the image pickup apparatus in response to a request from the request transmission section, generates an intermediate image by extracting a portion of the taken image having been acquired, in accordance with the traveling direction notified by the request transmission section, and further generates the point-of-view converted image by using the intermediate image having been generated, and provides the image display apparatus with the point-of-view converted image.

The image generation apparatus is connected through the communication network to a plurality of image pickup apparatuses provided at different positions from each other. In this case, the request transmission section of the image display apparatus further notifies the image generation apparatus of a setting position of one of the plurality of image pickup apparatuses so as to request the point-of-view converted image of the setting position from the image generation apparatus. The image generation apparatus acquires a taken image from the one of the plurality of image pickup apparatuses provided at the setting position for which the point-of-view converted image is requested, in response to a request from the request transmission section, generates the point-of-view converted image, and provides the image display apparatus with the point-of-view converted image. The second display section of the image display apparatus displays the second map image in which the point-of-view converted image of the setting position for which the point-of-view converted image is requested by the request transmission section, is superimposed on the first map image.

Preferably, the second map image is obtained by superimposing the point-of-view converted image on the first map image at one of a position corresponding to a setting position of the image pickup apparatus, a position corresponding to the vicinity of the setting position, and at a position corresponding to a position taken by the image pickup apparatus.

Further, a second aspect of the present invention is directed to an image display apparatus, connected through a communication network to at least one image pickup apparatus and an image generation apparatus each of which is externally provided, capable of displaying at least two types of map images. The image display apparatus includes: a first generation section for generating a first map image of a moving object and a vicinity of the moving object, the moving object having the image display apparatus mounted thereon; a first display section for displaying the first map image generated by the first generation section; and a request transmission section for requesting a point-of-view converted image from the image generation apparatus by notifying the image generation apparatus of a point-of-view angle and a line-of sight direction of the first map image displayed by the first display section. Here, the image generation apparatus acquires a taken image from the image pickup apparatus in response to a request from the request transmission section, and thereafter generates the point-of-view converted image by converting a point-of-view angle and a line-of-sight direction of the taken image having been acquired so as to match the point-of-view angle and the line-of-sight direction, respectively, of the first map image, and provides the image display apparatus with the point-of-view converted image. The image display apparatus further includes a second generation section for generating a second map image in which the point-of-view converted image provided by the image generation apparatus is superimposed on the first map image, and a second display section for displaying the second map image generated by the second generation section.

The request transmission section of the image display apparatus further notifies the image generation apparatus of a traveling direction of the moving object. The image generation apparatus acquires a taken image from the image pickup apparatus in response to a request from the request transmission section, generates an intermediate image by extracting a portion of the taken image having been acquired, in accordance with the traveling direction notified by the request transmission section, and further generates the point-of-view converted image by using the intermediate image having been generated, and provides the map image display apparatus with the point-of-view converted image.

The image generation apparatus is connected through the communication network to a plurality of image pickup apparatuses provided at different positions from each other. In this case, the request transmission section of the image display apparatus further notifies the image generation apparatus of a setting position of one of the plurality of image pickup apparatuses so as to request the point-of-view converted image of the setting position from the image generation apparatus. The image generation apparatus acquires a taken image from the one of the plurality of image pickup apparatuses provided at the setting position for which the point-of-view converted image is requested, in response to a request from the request transmission section, generates the point-of-view converted image, and provides the map image display apparatus with the point-of-view converted image. The second display section of the image display apparatus displays the second map image in which the point-of-view converted image of the setting position for which the point-of-view converted image is requested by the request transmission section is superimposed on the first map image.

The second generation section generates the second map image by superimposing the point-of-view converted image provided by the image generation apparatus, on the first map image, at one of a position corresponding to a setting position of the image pickup apparatus, a position corresponding to the vicinity of the setting position, and a position corresponding to a position taken by the image pickup apparatus.

Further, a third aspect of the present invention is directed to an image providing system. The image providing system comprises: an image generation apparatus connected to at least one image pickup apparatus, which is externally provided, so as to communicate with each other; and an image display apparatus, connected to the image generation apparatus so as to communicate with each other, capable of displaying at least two types of map images. Here, the image display apparatus includes: a first display section for displaying a first map image of a moving object and a vicinity of the moving object, the moving object having the image display apparatus mounted thereon; and a request transmission section for requesting a point-of-view converted image from the image generation apparatus by notifying the image generation apparatus of a point-of-view angle and a line-of-sight direction of the first map image displayed by the first display section. Further, the image generation apparatus includes: an image acquisition section for acquiring a taken image from the image pickup apparatus in response to a request from the request transmission section; a point-of-view conversion processing section for generating the point-of-view converted image by converting a point-of-view angle and a line-of-sight direction of the taken image having been acquired by the image acquisition section so as to match the point-of-view angle and the line-of-sight direction, respectively, of the first map image; and a transmission section for transmitting, to the image display apparatus, the point-of-view converted image generated by the point-of-view conversion processing section. The image display apparatus further includes a second display section for displaying a second map image in which the point-of-view converted image provided by the image generation apparatus is superimposed on the first map image.

Further, a fourth aspect of the present invention is directed to an image generation apparatus, connected through a communication network to at least one image pickup apparatus which is externally provided, capable of generating at least two types of map images. The image generation apparatus includes: a first generation section for generating a first map image representing a map of an external moving object and a vicinity of the external moving object; a point-of-view conversion processing section for acquiring a taken image from the image pickup apparatus in response to a request transmitted from the external moving object, and thereafter generating the point-of-view converted image by converting a point-of-view angle and a line-of-sight direction of the taken image having been acquired so as to match the point-of-view angle and the line-of-sight direction, respectively, of the first map image; and a second generation section for generating a second map image in which the point-of-view converted image generated by the point-of-view conversion processing section is superimposed on the first map image; and a transmission section for transmitting, to the external moving object, the second map image generated by the second generation section.

### EFFECT OF THE INVENTION

According to each of the aspects, in the second map image, the direction and the point-of-view angle of the point-of-view converted image are converted so as to match the direction and the point-of-view angle, respectively, of the first map image, and therefore, when a user in a moving space views the second map image, the user is allowed to intuitively understand a content of the point-of-view converted image included in the second map image.

### BRIEF DESCRIPTION OF THE DRAWINGS

[FIG. 1] FIG. 1 is a block diagram illustrating an entire configuration of an image providing system according to a first embodiment of the present invention.
[FIG. 2] FIG. 2 is a block diagram illustrating in detail a configuration of an image generation apparatus 2 shown in FIG. 1.
[FIG. 3] FIG. 3 is a block diagram illustrating in detail a configuration of an image display apparatus 3 shown in FIG. 1.
[FIG. 4] FIG. 4 is a flow chart illustrating process steps of each of the image generation apparatus 2 and the image display apparatus 3 shown in FIG. 1.
[FIG. 5] FIG. 5 is a schematic diagram illustrating an example of a first map image displayed in step S12 shown in FIG. 4.
[FIG. 6] FIG. 6 is a schematic diagram illustrating an example of a service point map image displayed in step S14 shown in FIG. 4.
[FIG. 7] FIG. 7 is a schematic diagram illustrating an example of a data structure of a point-of-view converted image request generated in step S16 shown in FIG. 4.
[FIG. 8] FIG. 8 is a schematic diagram illustrating an example of a second map image generated in step S18 shown in FIG. 4.
[FIG. 9] FIG. 9 is a schematic diagram illustrating another example of the second map image generated in step S18 shown in FIG. 4.
[FIG. 10] FIG. 10 is a schematic diagram illustrating still another example of the second map image generated in step S18 shown in FIG. 4.
[FIG. 11] FIG. 11 is a schematic diagram illustrating an example of a service point map image displayed in step S14 shown in FIG. 4.

### DESCRIPTION OF THE REFERENCE CHARACTERS

- 1: image pickup apparatus
- 2: image generation apparatus
- 3: image display apparatus
- 4: communication network
- 21, 35: communication section
- 22, 32: storage device
- 23, 33: central processing section
- 31: input device
- 34: display section

### BEST MODE FOR CARRYING OUT THE INVENTION

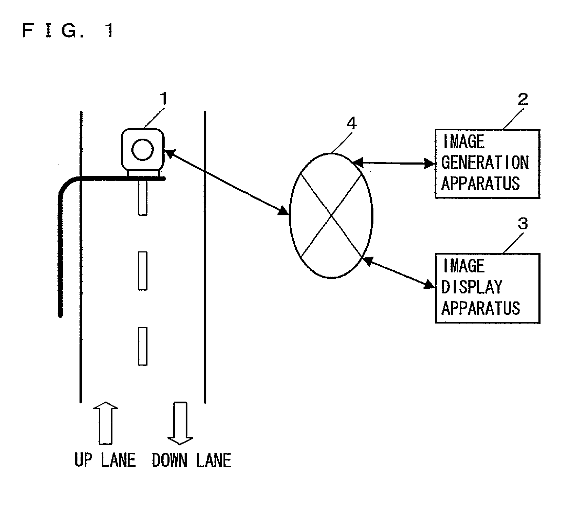

FIG. 1 is a block diagram illustrating an entire configuration of an image providing system according to a first embodiment of the present invention. As shown in FIG. 1, in the image providing system, at least one image pickup apparatus 1, an image generation apparatus 2, and an image display apparatus 3 are connected to each other through a communication network 4 so as to communicate with each other.

The image pickup apparatus 1 is provided in the vicinity of an actual road, takes an image of a state of the road from the point of view of a camera thereof, and transmits the taken image to the communication network 4. Next, an exemplary manner in which the image pickup apparatus 1 is provided will be described. For example, as shown in FIG. 1, the image pickup apparatus 1 is provided above the center line of the road so as to be directed to both the up lane and the down lane of the road. In this case, the image pickup apparatus 1 transmits, to the communication network 4, an image, taken from the point of view of the camera thereof, of states of both the lanes of the road.

The image generation apparatus 2 is, for example, a server device on the communication network 4, and provides the image display apparatus 3 with a point-of-view converted image. The point-of-view converted image will be described below in detail.

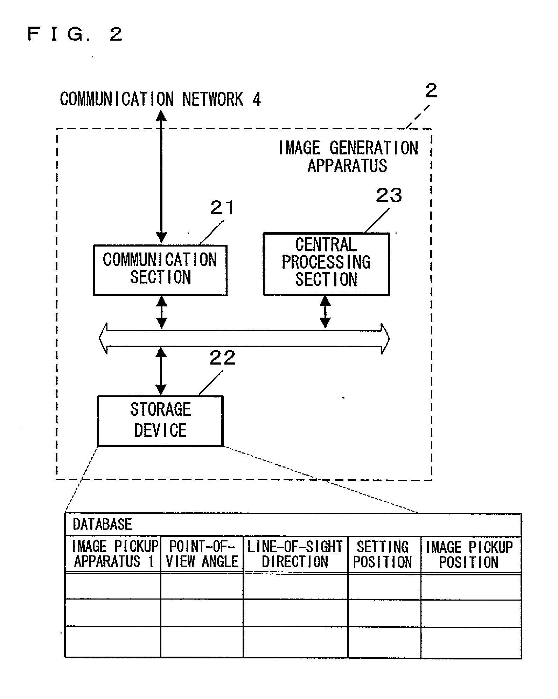

Here, FIG. 2 is a block diagram illustrating in detail a configuration of the image generation apparatus 2 shown in FIG. 1. In FIG. 2, the image generation apparatus 2 comprises a communication section 21, a storage device 22, and a central processing section 23.

The communication section 21 transmits, to the central processing section 23, various data transmitted through the communication network 4, and transmits, to the communication network 4, various data received from the central processing section 23. The storage device 22 stores a database for managing at least a point-of-view angle, a line-of-sight direction, a setting position, an image pickup position, and identification information of each image pickup apparatus 1 on the communication network 4, as shown in FIG. 2. The point-of-view angle is an angle between an optical axis of the image pickup apparatus 1 and a surface of the road, the line-of-sight direction represents a line-of-sight direction (corresponding to a compass direction) of the image pickup apparatus 1 on the horizontal surface, and the image pickup position represents positional information relating to a road area taken by the image pickup apparatus 1.

The central processing section 23 typically includes a CPU, a ROM, and a RAM. The CPU executes a computer program previously stored in the ROM, by using the RAM as a work area. The processing performed by the central processing section 23 will be specifically described below with reference to a flow chart and the like.

The image display apparatus 3 is typically an information terminal apparatus or a navigation apparatus mounted in a vehicle corresponding to a moving space, and is characterized by performing a process of requesting a point-of-view converted image from the image generation apparatus 2, and combining (superimposing), with (on) a map image, the point-of-view converted image transmitted from the image generation apparatus 2.

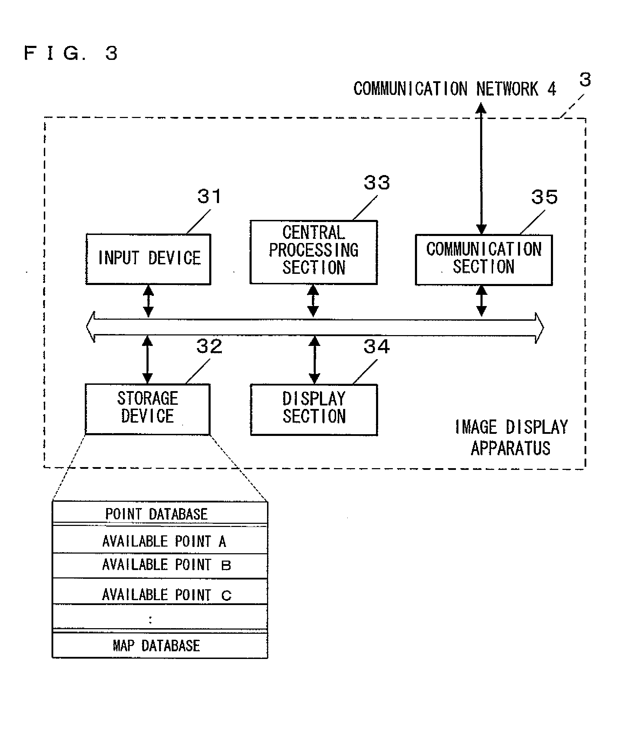

Here, FIG. 3 is a block diagram illustrating in detail a configuration of the image display apparatus 3 shown in FIG. 1. In FIG. 3, the image display apparatus 3 comprises an input device 31, a storage device 32, a central processing section 33, a display section 34, and a communication section 35.

The input device 31 is, for example, a touch panel or a button to be operated by a user of the image display apparatus 3.

The storage device 32 stores a point database representing a collection of information with which identification of a point (hereinafter, referred to as an available point) at which the image generation apparatus 2 is allowed to provide the point-of-view converted image is enabled, as shown in FIG. 3. The storage device 32 further stores a map database representing a map of a predetermined area across, for example, Japan. The map data is structured such that the point-of-view angle of the map displayed on the display section 34 is allowed to be changed in the up/down direction and/or in the right/left direction. Further, the map database is stored such that the direction for the map on a screen (hereinafter, referred to as a display screen) of the display section 34 is changeable (such that the top of the map represents the north or the heading direction).

The central processing section 33 typically includes a CPU, a ROM and a RAM. The CPU executes a computer program previously stored in the ROM, by using the RAM as a work area. The processing performed by the central processing section 33 will be specifically described below with reference to a flow chart and the like.

The display section 34 displays various images generated by the central processing section 33.

The communication section 35 transmits, to the central processing section 33, various data transmitted through the communication network 4, and transmits, to the communication network 4, various data received from the central processing section 33.

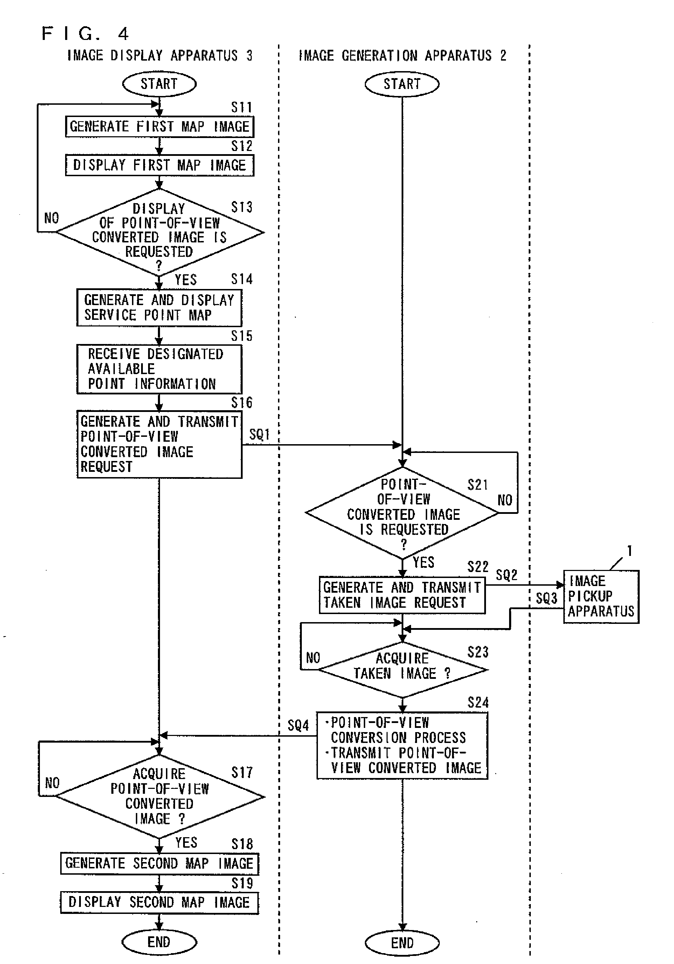

Next, the processing performed by the image generation apparatus 2 and the image display apparatus 3 as described above will be described in detail with reference to a flow chart shown in FIG. 4.

Initially, the central processing section 33 of the image display apparatus 3 generates a first map image (step S11 in FIG. 4). Specifically, the central processing section 33 acquires the most recent position of a vehicle having the image display apparatus 3 mounted therein by using an output from a GPS receiver and an autonomous navigation sensor not shown, and thereafter reads, from the map database in the storage device 32, map data representing the most recent position and the vicinity thereof. The central processing section 33 generates the first map image by using the read map data. Here, the direction and the point-of-view angle for the first map image having been generated are determined by a user operating the input device 31 or are predetermined.

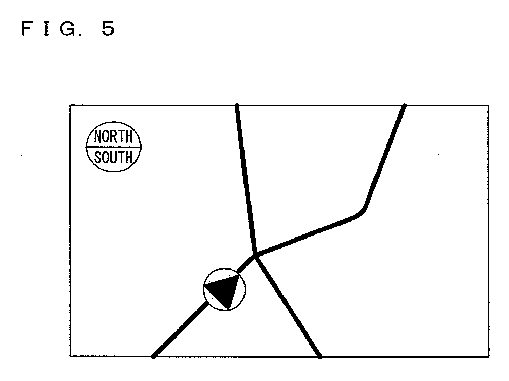

Reference map data generated in the above manner is transmitted from the central processing section 33 to the display section 34, and the display section 34 displays, on the display screen, the first map image as shown in FIG. 5 (step S12). A route acquired through a well-known route search processing may be combined with the first map image.

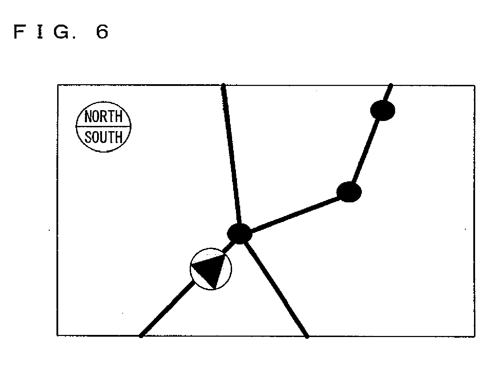

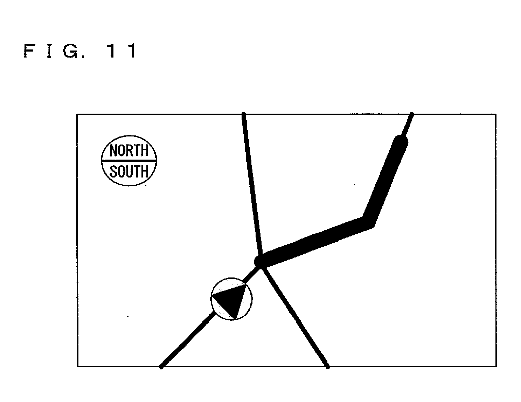

Here, when the point-of-view converted image is to be displayed on the display section 34, a user operates the input device 31 in a predetermined manner. The input device 31 provides the central processing section 33 with a request of displaying the point-of-view converted image. When the central processing section 33 receives the request of displaying the point-of-view converted image as described above (step S13), the central processing section 33 generates a service point map (see FIG. 6) on which a predetermined mark (hereinafter, referred to as an available point mark) is associated with the available point (step S14). In FIG. 6, while the available point mark is represented as ●, the available point mark may be represented as, for example, a camera mark or an icon including an illustration of a camera so as to preferably allow a user to easily know that a video is provided. Further, when a lot of cameras are provided on the road so as to provide videos of the road in a series of areas, the available area may be displayed as shown in FIG. 11. Further, at a time when the service point map is displayed, the direction for the map may be changed such that the top of the map represents the north. This is because, when the head of the map represents the heading direction, the direction for the map may be slightly different between at a time at which the point-of-view converted image is requested and at a time at which the point-of-view converted image is received, or it is necessary to change the direction of the point-of-view converted image each time the direction (the cardinal direction toward which the vehicle is heading) for the map is changed.

The process of step S14 will be specifically described. Initially, in the same manner as described above, the map data representing the most recent position and the vicinity thereof is read. The central processing section 33 further reads, from the point database, available point information included in a range covered by the map data. The central processing section 33 combines the available point mark with a point identified by the available point information having been read, in a map represented by the read map data, so as to generate the service point map.

The service point map (see FIG. 6) as described above is transmitted from the central processing section 33 to the display section 34, and displayed by the display section 34 (step S14).

In step S14, all the available points indicated by the available point information having been read may be displayed as a list. When the determination of step S13 is No, the process is returned to step S11.

When the service point map image is displayed, a user designates an available point desired by the user by operating the input device 31. Thus, the available point information having been designated is provided to the central processing section 33 (step S15).

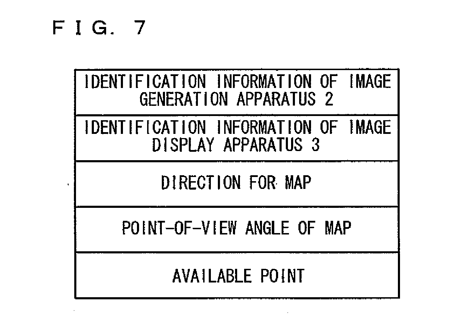

Next, the central processing section 33 generates information (hereinafter, refereedtoasapoint-of-viewconverted image request) used for allowing the image display apparatus 3 to request the point-of-view converted image from the image generation apparatus 2 (step S16). Here, the point-of-view converted image request includes identification information used for uniquely identifying each of the image generation apparatus 2 and the image display apparatus 3 on the communication network 4, information representing the direction and the point-of-view angle of the map having been most recently set, and the available point information acquired in step S15, as shown in FIG. 7.

The point-of-view converted image request generated as describe above is transmitted to the communication network 4 through the communication section 35 (step S16), transmitted over the communication network 4, and received by the communication section 21 of the image generation apparatus 2 (sequence SQ1 shown in FIG. 4).

When the central processing section 23 of the image generation apparatus 2 receives the point-of-view converted image request from the communication section 21 (step S21), the central processing section 23 generates a taken image request for requesting a taken image from the image pickup apparatus 1 provided at the available point(s) represented by the point-of-view converted image request (step S22). Alternatively, the central processing section 23 may recognize the received available point as the image pickup position, and generate the taken image request for requesting the taken image.

The process of step S22 will be specifically described. The central processing section 23 acquires, from the database (see FIG. 2) of the storage device 22, the identification information of the image pickup apparatus 1 provided at the setting position represented by the available point information included in the point-of-view converted image request having been received. The central processing section 23 generates the taken image request including the identification information having been acquired.

The taken image request generated as described above is transmitted to the communication network 4 through the communication section 21 (step S22), and is received by the image pickup apparatus 1 identified by the identification information included in the taken image request (sequence SQ2 shown in FIG. 4). The image pickup apparatus 1 generates the taken image as described above and transmits the taken image to the image generation apparatus 2, in response to the reception of the taken image request (sequence SQ3).

When the central processing section 23 of the image generation apparatus 2 receives the taken image through the communication section 21 (stepS23), the central processing section 23 performs the point-of-view conversion process for the taken image (step S24).

The process of step S24 will be specifically described. The central processing section 23 acquires, from the database (see FIG. 2) of the storage device 22, the point-of-view angle and the line-of-sight direction of the image pickup apparatus 1 from which the taken image having been most recently received has been transmitted. The point-of-view angle having been acquired is different from the point-of-view angle of the map having been most recently set by the image display apparatus 2, and therefore the central processing section 23 changes the point-of-view angle of the taken image having been most recently taken, so as to match the point-of-view angle of the map. The central processing section 23 further changes the direction, specified by the line-of-sight direction having been acquired, of the taken image in which the point-of-view has been converted, so as to match the direction for the map having been most recently set, thereby generating the point-of-view converted image.

The point-of-view converted image generated as described above is transmitted to the communication network 4 through the communication section 21 (step S24), and is received by the communication section 35 of the image display apparatus 3 from which the point-of-view converted image request has been transmitted (sequence SQ4 shown in FIG. 4).

When the central processing section 33 of the image display apparatus 3 receives the point-of-view converted image through the communication section 35 (step S17), a second map image in which the point-of-view converted image is combined with the first map image is generated (step S18).

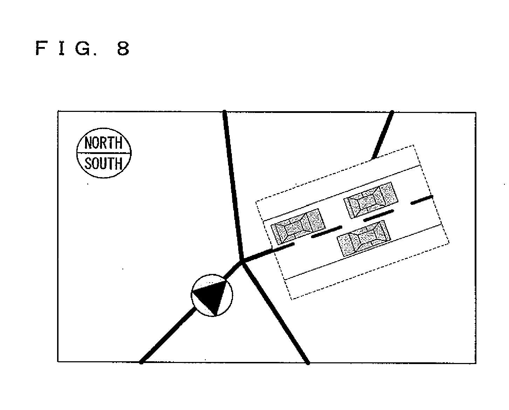

The process of step S18 will be specifically described. The central processing section 33 reads, from the map database of the storage device 32, map data representing a point designated in step S15 and the vicinity thereof. The central processing section 33 combines the point-of-view converted image having been most recently received, with the designated available point in the map image represented by the map data having been read, so as to generate the second map image shown in FIG. 8.

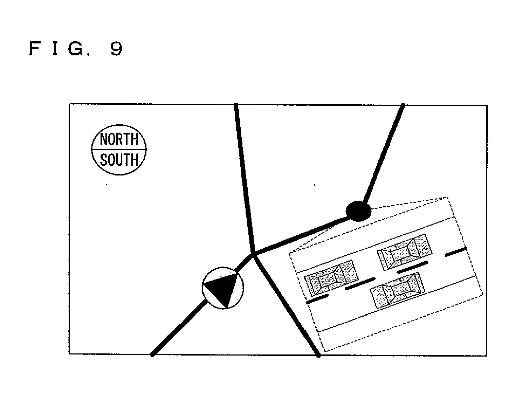

While in an example shown in FIG. 8 the point-of-view converted image is combined with the designated available point, the point-of-view converted image may be displayed at a position corresponding to the vicinity of the setting position of the image pickup apparatus 1, or at a position corresponding to a position taken by the image pickup apparatus. As shown in FIG. 9, the point-of-view converted image may be displayed so as to allow a user to recognize relationship with the designated available point. Further, the image display apparatus 3 may be configured such that a user is allowed to change between generation of the second map image shown in FIG. 8, and generation of that shown in FIG. 9, by operating the input device 31.

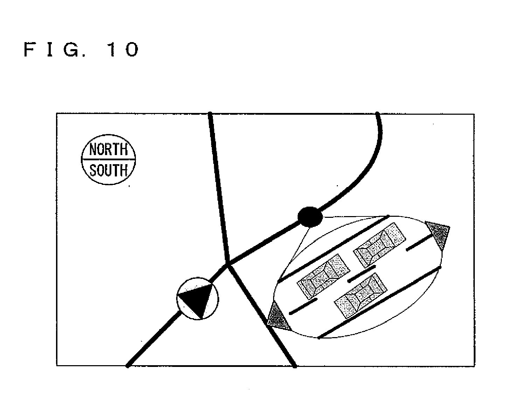

Further, as shown in FIG. 10, the point-of-view converted image may have triangle buttons at both ends thereof, and a position on the road displayed in the point-of-view converted image may be changed by pressing the triangle button.

The second map image generated as described above is transmitted from the central processing section 33 to the display section 34, and the display section 34 displays the received second map image on the display screen (step S19). In the second map image as described above, the direction and the point-of-view angle of the point-of-view converted image match the direction and the point-of-view angle, respectively, of the map image, so that a user in a moving space is allowed to intuitively understand the content of the point-of-view converted image.

In the present embodiment, the point-of-view converted image including both lanes of the road is generated. However, the present invention is not restricted thereto, and when the image display apparatus 3 notifies the image generation apparatus 2 of the direction in which the vehicle is traveling, the image generation apparatus 2 is allowed to recognize the direction in which the vehicle is traveling, and may generate an intermediate image including only the lane on which the vehicle is traveling, and may thereafter generate the point-of-view converted image as described above so as to provide the image display apparatus 3 with the point-of-view converted image. Thus, the image generation apparatus 2 is allowed to provide the image display apparatus 3 with the point-of-view converted image obtained by changing a range covered by the point-of-view converted image in accordance with the direction in which the vehicle is traveling. In this case, the image display apparatus 3 generates and displays the second map image in which the point-of-view converted image including only the lane on which the vehicle is traveling is superimposed on the first map image. Thus, a user is allowed to intuitively understand the state of the lane on which the vehicle is traveling and which is important to the user, without seeing the state of the opposing lane.

Further, following step S19, the process may be returned to step S11. However, when step S14 may be executed following step S19, a user is allowed to designate another available point, and the image display apparatus 3 is allowed to acquire the point-of-view converted image including another point. Thus, the user is allowed to view another second map image.

Further, in the present embodiment, the first and the second map images are generated by the image display apparatus 3. The present invention is not restricted thereto. The first and the second map images may be generated by the image generation apparatus 2. In this case, the image display apparatus 3 needs to transmit, to the image generation apparatus 2, the information necessary for generation of the first and the second map images. Further, when the image display apparatus 3 is capable of directly communicating with the image pickup apparatus 1, the point-of-view conversion process performed by the image generation apparatus 2 in the present embodiment may be performed by the image display apparatus 3. Further, one of the image generation apparatus 2 or the image display apparatus 3 may automatically monitor a moving image at a point previously set by a user or a specific point (an intersection or a point, uploaded on the Internet, at which a congestion often occurs) on the set route, and measure traffic flow through image processing, and when, for example, a traffic situation changes due to, for example, a congestion occurring or a congestion being solved, it is possible to automatically display the image representing the point. Further, a point at which a congestion occurs may be checked while sequentially changing a point, on a set route, at which the moving image is automatically monitored, and further an image of a point which is not indicated by congestion information transmitted, for example, through an FM multiplex broadcasting and/or from a transmitter on a road included in a traffic information system (VICS (Vehicle Information and Communication System)), may be displayed.

### INDUSTRIAL APPLICABILITY

The image display apparatus according to the present invention is useful for an in-vehicle information terminal apparatus, a navigation apparatus, and the like, through which amovinguserneeds to intuitivelyunderstandamap image. Further, the image generation apparatus according to the present invention is useful for a server apparatus and the like connected through a communication network to, for example, the information terminal apparatus, the navigation apparatus as described above.

## Claims

1. An image display apparatus, connected through a communication network to at least one image pickup apparatus and an image generation apparatus each of which is externally provided, capable of displaying at least two types of map images,
wherein the image display apparatus includes
a first display section for displaying a first map image of a moving object and a vicinity of the moving object, the moving object having the image display apparatus mounted thereon, and
a request transmission section for requesting a point-of-view converted image from the image generation apparatus by at least notifying the image generation apparatus of a point-of-view angle and a line-of-sight direction of the first map image displayed by the first display section,
wherein the image generation apparatus
acquires a taken image from the image pickup apparatus in response to a request from the request transmission section, and thereafter generates the point-of-view converted image by converting a point-of-view angle and a line-of-sight direction of the taken image having been acquired so as to match the point-of-view angle and the line-of-sight direction, respectively, notified by the request transmission section, and provides the image display apparatus with the point-of-view converted image, and
wherein the image display apparatus further includes
a second display section for displaying a second map image in which the point-of-view converted image provided by the image generation apparatus is superimposed on the first map image.

2. The image display apparatus according to claim 1,
wherein the request transmission section of the image display apparatus further notifies the image generation apparatus of a traveling direction of the moving object, and
wherein the image generation apparatus
acquires a taken image from the image pickup apparatus in response to a request from the request transmission section, generates an intermediate image by extracting a portion of the taken image having been acquired, in accordance with the traveling direction notified by the request transmission section, and further generates the point-of-view converted image by using the intermediate image having been generated, and provides the image display apparatus with the point-of-view converted image.

3. The image display apparatus according to claim 1,
wherein the image generation apparatus is connected through the communication network to a plurality of image pickup apparatuses provided at different positions from each other,
wherein the request transmission section of the image display apparatus further notifies the image generation apparatus of a setting position of one of the plurality of image pickup apparatuses so as to request the point-of-view converted image of the setting position from the image generation apparatus,
wherein the image generation apparatus acquires a taken image from the one of the plurality of image pickup apparatuses provided at the setting position for which the point-of-view converted image is requested, in response to a request from the request transmission section, generates the point-of-view converted image, and provides the image display apparatus with the point-of-view converted image, and
wherein the second display section of the image display apparatus displays the second map image in which the point-of-view converted image of the setting position for which the point-of view converted image is requested by the request transmission section, is superimposed on the first map image.

4. The image display apparatus according to claim 1,
wherein the second map image is obtained by superimposing the point-of-view converted image on the first map image at one of a position corresponding to a setting position of the image pickup apparatus, a position corresponding to the vicinity of the setting position, and a position corresponding to a position taken by the image pickup apparatus.

5. An image display apparatus, connected through a communication network to at least one image pickup apparatus and an image generation apparatus each of which is externally provided, capable of displaying at least two types of map images,
wherein the image display apparatus includes
a first generation section for generating a first map image of a moving object and a vicinity of the moving object, the moving object having the image display apparatus mounted thereon,
a first display section for displaying the first map image generated by the first generation section, and
a request transmission section for requesting a point-of-view converted image from the image generation apparatus by notifying the image generation apparatus of a point-of-view angle and a line-of sight direction of the first map image displayed by the first display section,
wherein the image generation apparatus
acquires a taken image from the image pickup apparatus in response to a request from the request transmission section, and thereafter generates the point-of-view converted image by converting a point-of-view angle and a line-of-sight direction of the taken image having been acquired so as to match the point-of-view angle and the line-of-sight direction, respectively, of the first map image, and provides the image display apparatus with the point-of-view converted image, and
wherein the image display apparatus further includes
a second generation section for generating a second map image in which the point-of-view converted image provided by the image generation apparatus is superimposed on the first map image, and
a second display section for displaying the second map image generated by the second generation section.

6. The image display apparatus according to claim 5,
wherein the request transmission section of the image display apparatus further notifies the image generation apparatus of a traveling direction of the moving object, and
wherein the image generation apparatus
acquires a taken image from the image pickup apparatus in response to a request from the request transmission section, generates an intermediate image by extracting a portion of the taken image having been acquired, in accordance with the traveling direction notified by the request transmission section, and further generates the point-of-view converted image by using the intermediate image having been generated, and provides the map image display apparatus with the point -of -view converted image.

7. The image display apparatus according to claim 5,
wherein the image generation apparatus is connected through the communication network to a plurality of image pickup apparatuses provided at different positions from each other,
wherein the request transmission section of the image display apparatus further notifies the image generation apparatus of a setting position of one of the plurality of image pickup apparatuses so as to request the point-of-view converted image of the setting position from the image generation apparatus,
wherein the image generation apparatus
acquires a taken image from the one of the plurality of image pickup apparatuses provided at the setting position for which the point-of-view converted image is requested, in response to a request from the request transmission section, generates the point-of-view converted image, and provides the map image display apparatus with the point-of-view converted image, and
wherein the second display section of the image display apparatus displays the second map image in which the point-of-view converted image of the setting position for which the point-of-view converted image is requested by the request transmission section is superimposed on the first map image.

8. The image display apparatus according to claim 5 , wherein the second generation section generates the second map image by superimposing the point-of-view converted image provided by the image generation apparatus, on the first map image, at one of a position corresponding to a setting position of the image pickup apparatus, a position corresponding to the vicinity of the setting position, and a position corresponding to a position taken by the image pickup apparatus.

9. An image providing system comprising
an image generation apparatus connected to at least one image pickup apparatus, which is externally provided, so as to communicate with each other, and
an image display apparatus, connected to the image generation apparatus so as to communicate with each other, capable of displaying at least two types of map images,
wherein the image display apparatus includes
a first display section for displaying a first map image of a moving object and a vicinity of the moving object, the moving object having the image display apparatus mounted thereon, and
a request transmission section for requesting a point-of-view converted image from the image generation apparatus by notifying the image generation apparatus of a point-of-view angle and a line-of-sight direction of the first map image displayed by the first display section,
wherein the image generation apparatus includes
an image acquisition section for acquiring a taken image from the image pickup apparatus in response to a request from the request transmission section,
a point-of -view conversion processing section for generating the point-of-view converted image by converting a point-of-view angle and a line-of-sight direction of the taken image having been acquired by the image acquisition section so as to match the point-of-view angle and the line-of-sight direction, respectively, of the first map image, and
a transmission section for transmitting, to the image display apparatus, the point-of-view converted image generated by the point-of-view conversion processing section, and
wherein the image display apparatus further includes
a second display section for displaying a second map image in which the point-of-view converted image provided by the image generation apparatus is superimposed on the first map image.

10. An image generation apparatus, connected through a communication network to at least one image pickup apparatus which is externally provided, capable of generating at least two types of map images,
wherein the image generation apparatus includes
a first generation section for generating a first map image representing a map of an external moving object and a vicinity of the external moving object,
a point-of-view conversion processing section for acquiring a taken image from the image pickup apparatus in response to a request transmitted from the external moving object, and thereafter generating the point-of-view converted image by converting a point-of-view angle and a line-of-sight direction of the taken image having been acquired so as to match the point-of-view angle and the line-of-sight direction, respectively, of the first map image,
a second generation section for generating a second map image in which the point-of-view converted image generated by the point-of-viewconversion processing section is superimposed on the first map image, and
a transmission section for transmitting, to the external moving object, the second map image generated by the second generation section.
